# EUROPEAN PATENT SPECIFICATION

(11) **EP 3 937 021 B1**
(45) Date of publication and mention of the grant of the patent: **12.11.2025**
(21) Application number: 20184823.1
(22) Date of filing: 08.07.2020
(51) Int. Cl.: G06F 11/22, G06F 11/30, G06F 11/3668, G06V 10/56, G06V 10/82

(54) **METHOD FOR DETECTING ABNORMAL BEHAVIOR IN A COMPUTER SYSTEM**
VERFAHREN ZUM ERKENNEN VON ABNORMALEM VERHALTEN IN EINEM COMPUTERSYSTEM
PROCÉDÉ DE DÉTECTION DE COMPORTEMENT ANORMAL DANS UN SYSTÈME INFORMATIQUE

(43) Date of publication of application: 12.01.2022
(73) Proprietor: Bull SAS, 78340 Les Clayes-sous-Bois (FR)
(72) Inventor: Natarajan, Suryanarayanan, 411057 PUNE (IN)
(74) Representative: IPAZ

(56) References cited:
- CN-A- 110 830 435
- VICTOR DIBIA ET AL: "Deep Learning for Anomaly Detection - Cloudera Blog", 28 January 2020 (2020-01-28), XP055755801, Retrieved from the Internet <URL:https://blog.cloudera.com/deep-learning-for-anomaly-detection/> [retrieved on 20201202]

## Description

### Field of the invention

The present invention concerns a method for detecting abnormal behavior in a computer system.

### Background of the invention

Anomalies, often referred to as outliers, are data points or patterns in data that do not conform to a notion of normal behavior. Anomaly detection, then, is the task of finding those patterns in data that do not adhere to expected norms. The capability to recognize or detect anomalous behavior can provide highly useful insights into the system. Flagging or enacting a planned response when these unusual cases occur can save businesses time, money, and customers.

There is a pressing requirement in the industry for tools and algorithms to detect anomalies in the gathered performance data from the system.

A computing system basically works like a queue for example, the instructions go through processor pipeline in a queue, data moves from and to memory and storage subsystem in a queue. Finding out the bottleneck due to abnormal behavior of the system in the queue will improve the performance of the end user applications and improve the reliability of the system for the provider. But, computing systems have become way too complex to perform the bottleneck analysis in a traditional rule or expression-based algorithms. Traditional machine learning approaches are sub-optimal when it comes to high dimensional data, because they fail to capture the complex structure in the data. This is where deep learning methods can be leveraged for the task. In many domains, advanced techniques like neural network and fuzzy logic based solutions are used as a black-box technique to classify an outcome or predict an event. The main trade-off is these techniques may predict the event with high accuracy but lacks explainability.

In the computing system, the traditional rule based prediction techniques become too specific/tightly coupled to a system that they cannot be used widely across the domain. Moreover, the rule based techniques will require higher computational resource and may be a heavyweight tool that can hamper the performance of the running workloads.

The systems can be as small as an edge server running mission critical workloads to an as complex system as a High performance computing servers running a tight production workload. In both these cases, there is a huge requirement to have a light weight prediction system with higher accuracy. Deep Learning use cases have been widely used for knowledge discovery and Predictive Analytics. There are multiple use cases around where Deep Learning techniques are used to identify/predict anomalies in the system.

Due to the explainability, performance abnormalities detection is often considered as a rule based anomaly detection problem. Due to its complexity there are pockets of research that are very narrow and look into only one component of the system. For example, anomaly detection in performance due to disk failure/network congestion/ processor heating etc... keeps the focus on only one parameter.

Detecting anomaly in a live/production computing system is very complex as it involves lot of parameters. There are many works till now that has tried to predict performance of an application in a given system and also modeling health of a system in an empirical way. White box techniques are good to isolate and study a particular anomaly in the system in one layer and in correlation to one particular device. With white box it is not possible to consider all the monitoring parameters across the entire system. The number of parameters will be enormous which will be highly difficult to analyze using a white box technique or statistical techniques.

Document CN110830435 concerns the field of network flow monitoring. It discloses a method for extracting space-time characteristics of network traffic and detecting abnormality, the method comprising:
- establishing a network model based on historical network traffic data; said step comprising a step of converting the historical network traffic data into a two-dimensional image;
- compressing the network model to build a compressed model;
- and extracting characteristics of the network traffic data based on the compressed model and carrying out anomaly detection.

The existing solutions do not consider all parameters from the system as it is too complex to solve the problem with rule based technique.

Existing solutions are all resource and time consuming techniques as they execute whole sequence of rules and are not suitable for real-time detection of the performance anomaly.

An object of the present invention is to provide a method which able to detect anomalies effectively and in real time.

Another object of the present invention is to provide a method which is not time consuming.

A further object of the present invention is to provide a method for managing huge volume of data.

### Disclosure of the invention

These and other objects of the present invention are substantially achieved by providing a method according to claim 1.

The invention makes it possible to determine abnormal behavior from a part of or all metrics of one, two or all the three layers. The present invention allows the use of a huge amount of metrics to detect the responsible for an anomaly.

The present invention provides operators with additional capabilities to detect problematic system components and assess the impact of system changes, for example software updates, on application performance. Moreover, this anomalies detection can be used to identify security related issues in any kind of computing system.

Detecting anomaly in a live/production computing system is very complex as it involves lot of parameters from all the three layers of a system comprising hardware layer, software layer and application layer. On contrary to the use of white box technique which is not suitable for analyzing huge search space, the present invention concerns the use of black box technique like Deep Learning to overcome analyzing huge search space.

With the present invention, indicators gathered from the application layer, the software layer and the hardware layer are transformed into an image. This transformation allows an image analysis in order to detect anomalies. Directly processing all indicators of the computer system to detect anomalies is very complex. The present invention is remarkable in that the anomalies detection is based on image processing, that is more efficient, faster and less energy consuming. It is also possible to monitor the entire computing system to address the performance issues.

The data science model of the invention is a model which can be determined during an offline phase before applying the method according to the invention. Data science encompasses data analytics, data mining, machine learning, and several other related disciplines.

The data science model is a deep learning or a machine learning pipeline that leads towards a solution automation.

The present invention makes it possible to look into all the available data from the system as an image and use Deep Learning based anomaly detection techniques to detect performance abnormalities and determine the causing agent.

In particular, the steps of the present invention can be carried out in real time. Each image is processed in real time. Thus, an abnormal behavior in the system can be immediately detected and treated. It is also possible to trigger a treatment only after processing several images.

According to an embodiment of the invention, the range can be variable in function of the number of metrics collected.

Such a configuration makes it possible to adapt the storage means and the processing capacities.

Advantageously, every image can be stored in a time series database. Indeed, the collected metrics can be a sequence of data collected at regular intervals over a period of time. The time series database makes it possible to support the huge volume of time-stamped data collected and to measures changes over time.

The image is a bitmap color or grayscale image.

The image is a bitmap image in 2D or 3D, color, with RGB coding, or grayscale.

For example, for a bitmap 2D grayscale image, only the level of light intensity is coded, preferably on one byte (256 values). By convention, the value zero represents black (zero light intensity) and the value 255 white (maximum light intensity). Accordingly, the range of the image coding is 0-255. In this case, the step of normalizing every metric results in converting each metric value into a value in the range 0 to 255.

In case of color image, the image can be in 256 colors (one byte). The coding may consist in associating to a pixel a value which no longer conveys the effective color of the pixel, but refers to an entry corresponding to this value in for example a look-up table comprising the complete representation of the color considered.

It is also possible to create a 24-bit RGB image, for example by combining at least three images, each coming from a layer and associating to a single color among the three colors of the RGB coding. For example, some parameters can be captured in all three layers. They can either be combined into a 24 bit RGB image or they can be compressed with XOR or AND operations and can be used as 8 bit image itself.

During the step of creating the image, the size of the image is determined in function of the number of metrics collected.

For example, it is possible to have a predefined size of the image. If the number of metrics is not enough to fill the image, the non-filled pixels could be filled with a predefined value. If the number of metrics exceeds the size of the image, a combination of metrics could be applied or some metrics could be ignored for a next step. It is also possible to only keep useful data from all metrics collected. For example, in a deterministic mission critical system, the non-deterministic input can come from only certain components in the device. Knowing that, it is possible to reduce the very obvious parameters to data intended to be used for creating the image.

Moreover, during the step of creating the image, the resolution of the image can be determined in function of the number of metrics collected.

Such a configuration makes it possible to adapt the storage means and the processing capacities.

According to the invention, each normalized metric can be a value of a pixel of the image. Thus, the normalization step may consist in associated each metric to one pixel of the image, the value of the pixel being determined by means of a transfer function between the metrics space and the range of the image coding.

In particular, the method according to the invention can further comprise a step of self-healing when an abnormal behavior is detected. The processing unit may be configured to apply a treatment when an anomaly is detected or to analyze the database for applying a treatment when for example a predefined criterion is reached.

Preferably, the metrics can comprise performance and/or security metrics. The metrics can be directly sent by the three layers or obtained using computer sensors disposed in the computer system.

The metrics according to the invention are basic metrics, key performance indicators or other kind of data available for monitoring the performance and/or the security in the computer system.

The method according to the invention can further comprise a step of identifying a causing agent when an abnormal behavior is detected. A causing agent could be a component that caused the abnormal behavior. For example, when an application performs well, the memory bandwidth can be 10GB/s. Suddenly due to partial RAM bank failure, the memory bandwidth drops to 5 GB/s then the application runtime (metric) has gone up significantly. So here when the memory bandwidth is collected and monitored, it is possible to detect that the causing agent is the hardware malfunction.

The present invention makes it possible to look into all the available data from the system as an image and use Deep Learning based anomaly detection techniques to detect performance abnormalities and determine the causing agent.

The processing unit can be integrated in or arranged outside of the computer system. Thus, the method according to the invention may be executed inside or outside the computer system which is monitored. The processing unit can gather metrics directly to the computer system or via a network.

According to another aspect of the invention, it is proposed a computer program comprising instructions which, when the program is executed by a processing unit, cause the processing unit to carry out the steps of the method as described above.

The invention also concerns a non-transitory computer-readable storage medium encoded with computer-executable instructions which, when executed, perform the method as described above.

### Brief Description of the Drawings

Further advantages and characteristics of the invention will become apparent on examining the detailed description of an embodiment, which is in no way limitative, and the attached drawings, in which:
Figure 1 is a schematic diagram of an illustrative a computer system suitable for implementation of a method according to the invention,
Figure 2 is a screenshot showing some metrics from the application layer,
Figure 3 is a screenshot showing some metrics from the software layer,
Figure 4 is a screenshot showing some metrics from the hardware layer,
Figure 5 is a simplified diagram illustrating some steps of the method according to the invention,
Figure 6 is an illustrative example of an image obtained from collected metrics through three layers according to the invention,
Figure 7 is a simplified diagram illustrating some steps for creating a deep learning model in an offline work according to the invention,
Figure 8 is a simplified diagram illustrating some steps for applying a deep learning model during an online work according to the invention.

### Detailed Description

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications and alternatives falling within the scope of the present invention as defined by the appended claims.

Hereinafter, the present invention will be described in detail by explaining exemplary embodiments of the invention with reference to the attached drawings.

In accordance with the preferred embodiment, the method and device according to the invention relate to the following materials and processes:
Embodiments herein include computer-implemented methods, tangible non-transitory computer-readable mediums, and systems. The computer-implemented methods may be executed, for example, by a processor that receives instructions from a non-transitory computer-readable storage medium. Similarly, a system described herein may include at least one processor and memory, and the memory may be a non-transitory computer-readable storage medium. As used herein, a non-transitory computer-readable storage medium refers to any type of physical memory on which information or data readable by a processor may be stored. Examples include random access memory (RAM), read-only memory (ROM), volatile memory, nonvolatile memory, hard drives, CD ROMs, DVDs, flash drives, disks, and any other known physical storage medium. Singular terms, such as "memory" and "computer-readable storage medium," may additionally refer to multiple structures, such a plurality of memories and/or computer-readable storage mediums. As referred to herein, a "memory" may comprise any type of computer-readable storage medium unless otherwise specified. A computer-readable storage medium may store instructions for execution by a processor, including instructions for causing the processor to perform steps or stages consistent with an embodiment herein. Additionally, one or more computer-readable storage mediums may be utilized in implementing a computer-implemented method. The term "computer-readable storage medium" should be understood to include tangible items and exclude carrier waves and transient signals.

The present invention concerns a method to detect anomalies in a computer system. The computer system may be a single computer, a server, several computers, a network of computers, or other electronic apparatus comprising an application layer, a software layer and a hardware layer.

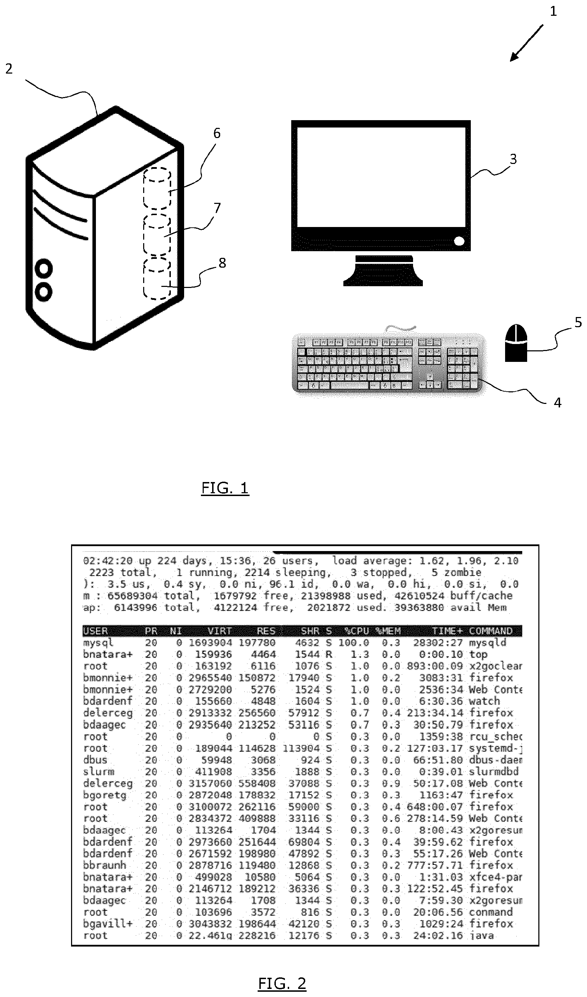

Figure 1 shows a computer system 1 comprising a server 2, a display 3 and input devices 4 and 5. The casing comprises among other components a central processing unit (CPU) 6, a memory 7 coupled to the CPU; and a computer readable storage medium 8 coupled to the CPU, the storage medium containing instructions that are executed by the CPU via the memory to implement the method according to the invention.

The server 2 comprises three layers: an application layer, a software layer and a hardware layer.

Concerning the application layer, usually most applications will have some basic metrics or Key Performance Indicators (KPI) that needs to be satisfied for the application to run properly. For example, for a video surveillance system considered at the edge (Edge computing is a concept where computing happens very near to the place it originates from), the system will have a very tight KPI requirement like the camera should capture 100 frames/sec, should be able to store 100 images/sec, should be able to analyze 50 images/sec etc. These metrics comes from the application developer or the domain expert, see for example the screenshot of Figure 2. There are also tools in linux "top" that will let a user to understand the system utilized by his application.

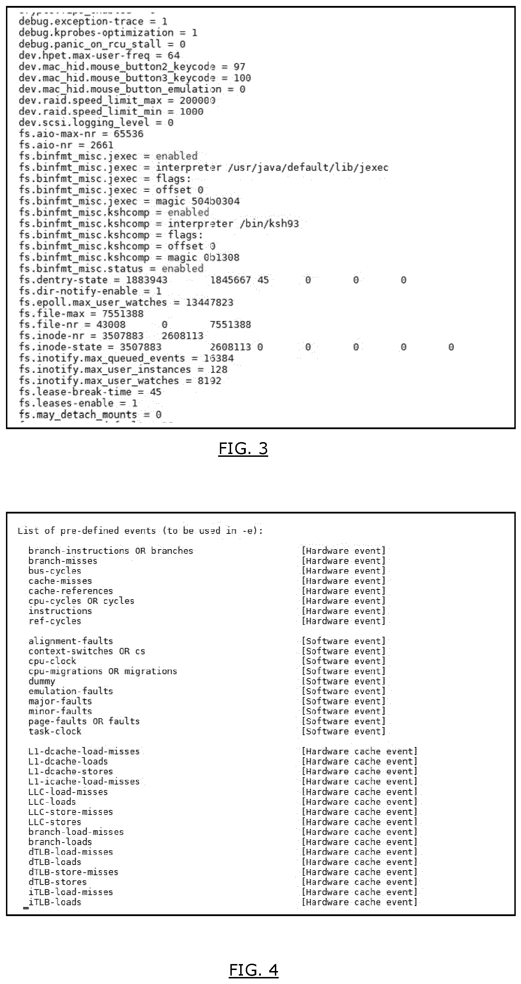

Concerning the software layer, operating system (OS) manages all the software that needs to run for the entire application to work seamlessly and OS has lot of sensitive parameters that may completely change the behavior of the application if changed. For example, if there is an intruder who has started some malicious activity or tried changing the sensitive parameter. The collected metrics will show a change in behavior in the software stack. This may or may not affect the application. But, this is an anomaly that has to be detected before it can propagate elsewhere. There are linux tools like "sysctl -a" that can give all the OS sensitive parameters. Figure 3 shows a screenshot of the parameter setting collected from Linux OS. There are 3292 parameters that needs to be observed in the particular system.

Concerning the hardware Layer, a computing system may have multiple hardware devices like compute device like CPU and memory, storage device, networking (Wifi, Ethernet,...) device and security device etc. Each of these hardware, may have inbuilt performance monitoring units in the form of hardware counters which captures all the metric related to the particular device. These metrics may have a safe operation limits beyond which alarms will be triggered by hardware. On the other hand, the operation limits can also be manually set by the expert who can determine the anomaly criteria depending on the requirements. These hardware related metrics can be obtained using Linux utility like "perf", see for example the screenshot on Figure 4.

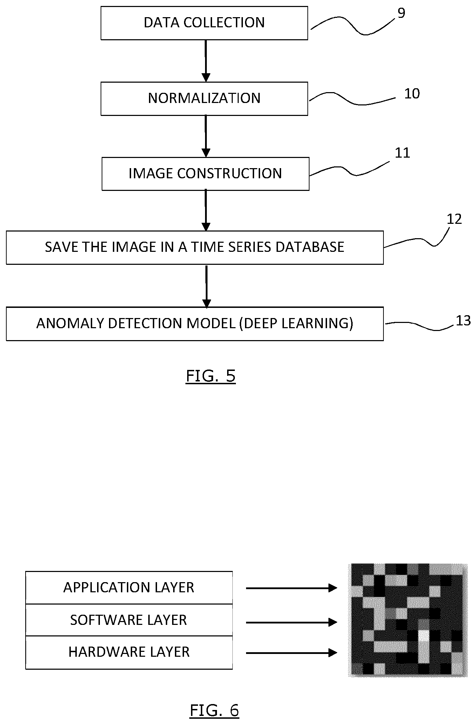

The simplified diagram of Figure 5 illustrates some steps according to the invention. The step 9 concerns the collection of Application, Software and Hardware Layer metrics. The processing unit manages the collection of metrics which are sent by layers components or obtained through computer sensors.

On step 10, for each metric, a normalization is performed in the RBG range: each metric is therefore converted to a value included in the RGB range.

The step 11 of image construction comprise the determination of the image size and/or resolution in function of the number of collected metrics, all metrics have to converted in the image. Then a bitmap RGB image is constructed, each pixel representing one metric. It is possible to consider others types of conversion. For example, one pixel could represent a combination of metrics.

On step 12, the image is saved in a time series database. All successive images are stored in this database.

On step 13, for each image, a deep learning engine is applied to the image in order to determine if there is an anomaly. It can also be applied at the same time on several images stored in the database.

Figure 6 is a schematic view illustrating the three layers 14, 15, 16, and the image 17 determined from the layer metrics.

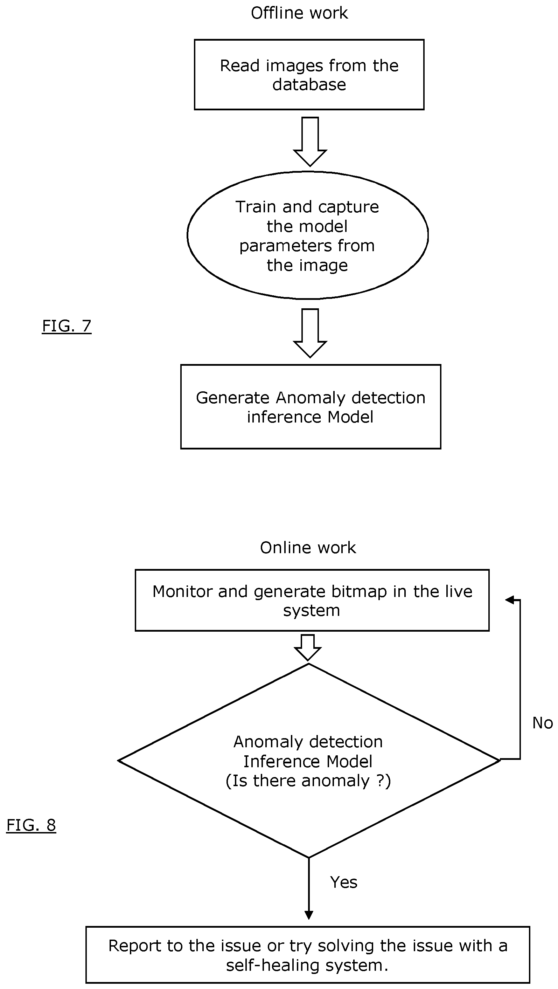

The deep learning engine is an inference model which can be obtained as follows. Several images can be constructed. Once large amount of images are available under various circumstances DeepLearning techniques is applied for training the anomaly detection model in the system. As an example an autoencoder as described on https://blog.cloudera.com/deep-learning-for-anomaly-detection/ concerns such a deep-learning technique that is used to detect anomaly by using image as input. By training the images offline, we will obtain the inference model which can be used in detecting any abnormalities in the online system. Moreover, if the system has any self-healing techniques, the issue is addressed without any human intervention else the issue is escalated to have human intervention. The following Figure 7 shows the offline process to build the inference model. The offline process comprises a step 18 where images are read from the database. The deep learning technique is applied to train and capture the model parameters from the images at step 19. Then, the anomaly detection inference model is generated at step 20.

The Figure 8 shows the online process using the anomaly detection inference model. The online process comprises a step 21 of monitoring and generating bitmap in the live system. The anomaly detection inference model is applied at step 22i to know if there is anomaly. If no, go back to step 21. If yes, at step 23, a report to the issue is generated or a self-healing system is used to try solving the issue.

Accordingly, the present discloses a method to detect the anomaly in the performance and/or security of an application/workload in the system using DeepLearning method.

Numerous variations and modifications will become apparent to those skilled in the art once the above disclosure is fully appreciated.

## Claims

1. Method of detecting abnormal behavior of a computer system comprising an application layer, a software layer and a hardware layer; the method being carried out by a processing unit (6) and comprising the steps of:
- collecting metrics (9) relating to at least one of application layer, software layer and hardware layer,
- normalizing (10) every metric into a range of an image coding, wherein each normalized metric is a value of a pixel of an image, the value of the pixel being determined by means of a transfer function between the metrics space and the range of the image coding; the range of the image coding being a RGB coding or a grayscale coding,
- creating (11) an image from at least all normalized metrics; the image being a bitmap color or grayscale image and the size of the image being determined in function of the number of metrics collected, and
- applying (13) a data science model on the created image to detect abnormal behavior, the data science model being a deep learning or a machine learning pipeline that leads towards a solution automation and the data science model being trained as anomaly detection model from previously constructed images stored in a database,
- when an abnormal behavior is detected, triggering an alarm or self-healing using a self-healing system and/or self-healing technique.

2. Method according to claim 1, wherein the range is variable in function of the number of metrics collected.

3. Method according to claim 1 or 2, wherein every image is stored in a time series database.

4. Method according to any of preceding claims, wherein during the step of creating the image, the resolution of the image is determined in function of the number of metrics collected.

5. Method according to any of preceding claims, wherein the metrics comprise performance and/or security metrics.

6. Method according to any of preceding claims, wherein the method further comprises a step of identifying a causing agent when an abnormal behavior is detected.

7. Method according to any of preceding claims, wherein the steps are carried out in real time, each image being processed in real time.

8. Method according to any of preceding claims, wherein the processing unit is integrated in or arranged outside of the computer system.

9. A computer program comprising instructions which, when the program is executed by a processing unit (6) , cause the processing unit to carry out the steps of the method of one of claims 1 to 8.

10. A non-transitory computer-readable storage medium encoded with computer-executable instructions which, when executed, perform the method of one of claims 1 to 8.

## Patentansprüche

1. Verfahren zum Erkennen von abnormalem Verhalten eines Computersystems, das eine Anwendungsschicht, eine Softwareschicht und eine Hardwareschicht umfasst; wobei das Verfahren von einer Verarbeitungseinheit (6) ausgeführt wird und die Schritte umfasst:
- Sammeln von Metriken (9), die sich auf mindestens eine von einer Anwendungsschicht, einer Softwareschicht und einer Hardwareschicht beziehen,
- Normalisieren (10) jeder Metrik in einen Bereich einer Bildcodierung, wobei jede normalisierte Metrik ein Wert eines Pixels eines Bildes ist, wobei der Wert des Pixels mittels einer Übertragungsfunktion zwischen dem Metrikraum und dem Bereich der Bildcodierung bestimmt wird; wobei der Bereich der Bildcodierung eine RGB-Codierung oder eine Graustufencodierung ist,
- Erstellen (11) eines Bildes aus mindestens allen normalisierten Metriken; wobei das Bild ein Bitmap-Farb- oder -Graustufenbild ist und die Größe des Bildes in Abhängigkeit von der Anzahl der gesammelten Metriken bestimmt wird, und
- Anwenden (13) eines Data-Science-Modells auf das erstellte Bild, um abnormales Verhalten zu erkennen, wobei das Data-Science-Modell eine Deep-Learning- oder Machine-Learning-Pipeline ist, die zu einer Lösungsautomatisierung führt, und wobei das Data-Science-Modell als Anomalieerkennungsmodell anhand zuvor erstellter, in einer Datenbank gespeicherter Bilder trainiert wird,
- wenn ein abnormales Verhalten erkannt wird, Auslösen eines Alarms oder einer Selbstheilung unter Verwendung eines Selbstheilungssystems und/oder einer Selbstheilungstechnik.

2. Verfahren nach Anspruch 1, wobei der Bereich in Abhängigkeit von der Anzahl der gesammelten Metriken variabel ist.

3. Verfahren nach Anspruch 1 oder 2, wobei jedes Bild in einer Zeitreihendatenbank gespeichert wird.

4. Verfahren nach einem der vorstehenden Ansprüche, wobei während des Schritts zum Erstellen des Bildes die Auflösung des Bildes in Abhängigkeit von der Anzahl der gesammelten Metriken bestimmt wird.

5. Verfahren nach einem der vorstehenden Ansprüche, wobei die Metriken Leistungs- und/oder Sicherheitsmetriken umfassen.

6. Verfahren nach einem der vorstehenden Ansprüche, wobei das Verfahren ferner einen Schritt zum Identifizieren eines verursachenden Agens umfasst, wenn ein abnormales Verhalten erkannt wird.

7. Verfahren nach einem der vorstehenden Ansprüche, wobei die Schritte in Echtzeit ausgeführt werden und jedes Bild in Echtzeit verarbeitet wird.

8. Verfahren nach einem der vorstehenden Ansprüche, wobei die Verarbeitungseinheit in das Computersystem integriert oder außerhalb davon angeordnet ist.

9. Computerprogramm, umfassend Anweisungen, die, wenn das Programm durch eine Verarbeitungseinheit (6) ausgeführt wird, die Verarbeitungseinheit veranlassen, die Schritte des Verfahrens nach einem der Ansprüche 1 bis 8 auszuführen.

10. Nichtflüchtiges, computerlesbares Speicherungsmedium, das mit computerausführbaren Anweisungen codiert ist, die, wenn sie ausgeführt werden, das Verfahren nach einem der Ansprüche 1 bis 8 durchführen.

## Revendications

1. Procédé pour la détection d'un comportement anormal d'un système informatique comprenant une couche d'application, une couche logicielle et une couche matérielle ; le procédé étant mis en œuvre par une unité de traitement (6) et comprenant les étapes consistant à :
- recueillir des mesures (9) relatives à au moins l'une parmi la couche d'application, la couche logicielle et la couche matérielle,
- normaliser (10) chaque mesure dans une gamme d'un codage d'image, dans lequel chaque mesure normalisée est une valeur d'un pixel d'une image, la valeur du pixel étant déterminée au moyen d'une fonction de transfert entre l'espace de mesure et la gamme du codage d'image ; la gamme du codage d'image étant un codage RVB ou un codage en niveaux de gris,
- créer (11) une image à partir d'au moins toutes les mesures normalisées ; l'image étant une image matricielle en couleurs ou en niveaux de gris et la taille de l'image étant déterminée en fonction du nombre de mesures collectées, et
- appliquer (13) un modèle de science des données sur l'image créée pour détecter un comportement anormal, le modèle de science des données étant un pipeline d'apprentissage profond ou d'apprentissage automatique qui conduit à une automatisation de solution et le modèle de science des données étant entraîné comme modèle de détection d'anomalies à partir d'images construites précédemment et stockées dans une base de données,
- lorsqu'un comportement anormal est détecté, déclencher une alarme ou autoréparer à l'aide d'un système d'autoréparation et/ou d'une technique d'autoréparation.

2. Procédé selon la revendication 1, dans lequel la gamme est variable en fonction du nombre de mesures collectées.

3. Procédé selon la revendication 1 ou 2, dans lequel chaque image est stockée dans une base de données de séries temporelles.

4. Procédé selon l'une quelconque des revendications précédentes, dans lequel, lors de l'étape de création de l'image, la résolution de l'image est déterminée en fonction du nombre de mesures collectées.

5. Procédé selon l'une quelconque des revendications précédentes, dans lequel les mesures comprennent des mesures de performance et/ou de sécurité.

6. Procédé selon l'une quelconque des revendications précédentes, dans lequel le procédé comprend en outre une étape d'identification d'un agent responsable lorsqu'un comportement anormal est détecté.

7. Procédé selon l'une quelconque des revendications précédentes, dans lequel les étapes sont effectuées en temps réel, chaque image étant traitée en temps réel.

8. Procédé selon l'une quelconque des revendications précédentes, dans lequel l'unité de traitement est intégrée dans le système informatique ou disposée à l'extérieur de celui-ci.

9. Programme informatique comprenant des instructions qui, lorsque le programme est exécuté par une unité de traitement (6), amènent l'unité de traitement à effectuer les étapes du procédé selon l'une des revendications 1 à 8.

10. Support de stockage non transitoire lisible par ordinateur codé avec des instructions exécutables par ordinateur qui, lorsqu'elles sont exécutées, réalisent le procédé selon l'une des revendications 1 à 8.
